## Europäisches Patentamt

## European Patent Office

## Office européen des brevets

(19)

(11) EP 0 848 570 A2

# EUROPÄISCHE PATENTANMELDUNG

(12)

(43) Veröffentlichungstag:
**17.06.1998  Patentblatt 1998/25**

(51) Int Cl.6: **H04Q 11/04**, H04L 12/56

(21) Anmeldenummer: **97440127.5**

(22) Anmeldetag: **08.12.1997**

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: **13.12.1996  CH 3075/96**

(71) Anmelder: **ALCATEL ALSTHOM COMPAGNIE
GENERALE D'ELECTRICITE
75008 Paris (FR)**

(72) Erfinder:
• **Grünenfelder, Reto, Dr.
8305 Dietlikon (CH)**
• **Stock, Thomas, Dr.
53225 Bonn/Beuel-Süd (DE)**

(74) Vertreter: **Brose, Gerhard, Dipl.-Ing. et al
Alcatel Alsthom
Intellectual Property Department,
Postfach 30 09 29
70449 Stuttgart (DE)**

(54) **Datenstromformung**

(57)    Ein Former (1) in einem Strom von Datenpaketen sorgt für die Einhaltung der Vereinbarungen über den Paketverkehr jeder virtuellen Verbindung. Er weist Mittel (11) für das Zwischenspeichern und Auslesen von Datenpaketen sowie zur Extraktion des Pakettakts auf, ferner eine Steuerung (12), welche die Pakete der verschiedenen Verbindungen zeitgerecht in den Datenstrom ausliest. Die Auswahl des Datenpakets erfolgt auf Grund eines Rangs, der durch eine Bewertungseinheit (20) für jedes zuvorderst in der virtuellen Warteschlange der individuellen Verbindung stehende Datenpaket festgelegt wird. Der Rang wird mit jedem Pakettakt nach Massgabe der vereinbarten Bandbreite für diese Verbindung inkrementiert; pro Takt genügt also eine Neuberechnung für jene höchstens zwei Verbindungen, für die ein Datenpaket neu an den Kopf der virtuellen Warteschlange vorstösst. Es sind zwei Verarbeitungseinheiten (21, 24) vorgesehen. In einer einfach vorhandenen ersten Verarbeitungseinheit (21) werden verbindungsindividuelle Bezugsgrössen (Bk) berechnet, in einer je Verbindung einmal vorhandenen zweiten Verarbeitungseinheit (24) werden diese lediglich noch gewichtet aufdatiert und mit der Priorität (PRIO) versehen.

Fig. 1

EP 0 848 570 A2

Printed by Jouve, 75001 PARIS (FR)

**Beschreibung**

Die Erfindung liegt auf dem Gebiet der Flusssteuerung von Datenpaketen in Datennetzen und betrifft einen Former für einen Strom von Datenpaketen gemäss Oberbegriff des Patentanspruchs 1 und ein Verfahren zum Formen eines Stroms von Datenpaketen nach dem Oberbegriff des Patentanspruchs 6.

Im Bestreben, Datennetze optimal auszulasten, werden mit den Benützern Vereinbarungen über die zu erbringenden und benützten Übertragungsdienste und die damit verbundenen Verkehrsparameter getroffen. Bei Nichteinhaltung der Vereinbarung werden Datenpakete diskriminiert, das heisst in den meisten Fällen, verworfen. Da jedoch Datenpakete beim Transport durch das Netz zeitlich unterschiedliche Verzögerungen erfahren, ergeben sich bezüglich Verkehrsparameter je nach Ort im Netz unterschiedliche Werte. Dieser Sachverhalt sei am Beispiel des Datenverkehrs nach dem asynchronen Übertragungsmodus näher erläutert (Asynchronous Transfer Mode, kurz ATM).

Für ATM gibt es verschiedene Übertragungsmodi, sogenannte "Transfer Capabilities". Sie sind durch ihre englischen Bezeichnungen charakterisiert, die da heissen Constant Bit Rate (CBR), real time Variable Bit Rate (rt-VBR), non real time Variable Bit Rate (nrt-VBR), Unspecified Bit Rate (UBR), ATM Block Transfer (ABT) und Available Bit Rate (ABR). Die einschlägigen Gremien (ITU-T, ETSI, ATM-F) haben diese Übertragungsmodi zum grossen Teil standardisiert. Das Netz stellt diese "Transfer Capabilities" dem Benutzer für den Transport seiner Daten zur Verfügung. Nachdem der Benutzer für eine Verbindung den für ihn adäquaten Modus ausgesucht hat, vereinbaren Benutzer und Netz die Werte der dazugehörigen Parameter. Schliesslich wird aufgrund dieser Parameter und dem Verfahren, das beim Überwachen der Verbindung zur Anwendung gelangt, ein Vertrag zwischen Benutzer und Netz vereinbart.

An bestimmten Stellen im Netz, insbesondere an der Benützer-Schnittstelle ("user network inteface", UNI) oder an netzinternen Übergängen ("network network interface", NNI), sind Verkehrsüberwachungen ("usage parameter control", UPC) etabliert, wo ein sogenannter "policing mechanism" die Einhaltung des Vertrags kontrolliert. Heute benutzt das Policing für alle Übertragungsmodi ausser für ABR den sogenannten "Generic Cell Rate Algorithm" (GCRA) mit den Vertragparametern "Increment I" und "Limit L". Für ABR ist der "Dynamic Generic Cell Rate Algorithm" (DGCRA) mit den Vertragparametern "Increment I(t)" und "Limit L" vorgesehen. Andere Verfahren sind gemäss ITU-T Empfehlung jedoch nicht ausgeschlossen. Zellen - so werden die Datenpakete im ATM genannt - welche nicht den Vertragsvereinbarungen entsprechend eintreffen, werden vom "policing mechanism" diskriminert, das heisst speziell gekennzeichnet oder - in den meisten Fällen - einfach verworfen, also aus dem Datenstrom entfernt.

Ein Benützer sorgt in der Regel für die Einhaltung des Vertrags, indem er den Datenstrom am Endgerät entsprechend ausgibt. Bekannt ist auch der Einsatz von Formern ("shaper") für das Formen des Datenstroms ("shaping"), sei dies am Endgerät selbst oder an einem Netzübergangselement. Sie basieren in der Regel auf einem für diesen Zweck ausgestalteten Policer. Eine Anregung hierfür gibt zum Beispiel die EP-A-0711055, welche die Anwendung eines Messverfahrens für charakteristische Grössen in einem Datenstrom und der zugehörigen Vorrichtung zur Beeinflussung eines Datenstroms offenbart. In Quellennähe kann ferner eine Rückmeldung an die Quelle vorgesehen werden, um den Quellenstrom zu beeinflussen.

Ein ATM-Verkehrsstrom wird durch verschiedene Behandlungen im Netz beeinflusst. Die zeitlichen Abstände zwischen den Zellen einer bestimmten Verbindung können deshalb an verschiedenen Stellen im Netz unterschiedlich sein. Ursache dafür können die Einreihung der vom Endgerät stammenden Datenpakete in einen Verkehrsstrom in einem dem ATM-Netz vorgelagerten "Customer Premises Network" (CPN) oder die statistische Multiplexierung im ATM-Netz selber sein. Beim ABR-Verkehr kommt erschwerend hinzu, dass sich die Verkehrsparameter über die Zeit laufend ändern können. Die durch das Netz verursachten zeitlichen Schwankungen des Eintreffens der Datenpakete einer Verbindung können sich an einer gewissen Stelle des Netzes so auswirken, dass kurzzeitig immer wieder der Vertrag verletzt wird, obwohl der Benützer (die Quelle) den Vertrag einhält. Besonders gravierend wirkt sich dies an der Stelle des Policings aus, wo Datenpakete verworfen werden, die nicht vertragskonform eintreffen.

Es besteht daher die Aufgabe, an einer ausgewählten Stelle im Netz, speziell vor einem Policing, sicherzustellen, dass die Zahl der Vertragsverletzungen minimal gehalten wird.

Die Aufgabe wird durch Vornahme einer verbindungsindividuellen Formung des Datenstroms gelöst, wie sie durch die Merkmale der Ansprüche 1 und 6 charakterisiert ist.

Ein Former in einem Strom von Datenpaketen weist Mittel für das verbindungsindividuelle Zwischenspeichern und Auslesen von Datenpaketen sowie zur Extraktion des Pakettakts auf. Zur Erfüllung seiner Aufgabe benötigt der Former einen sogenannten Scheduler, also eine Steuerung, welche die Pakete der verschiedenen Verbindungen zeitgerecht in den Datenstrom ausliest. Erfindungsgemäss erfolgt die Auswahl des Datenpakets auf Grund eines Rangs, der durch eine Bewertungseinheit für jedes zuvorderst in der virtuellen Warteschlange der individuellen Verbindung stehende Datenpaket festgelegt wird. Bevorzugt werden die ermittelten Ränge in einem Speicher abgelegt, auf den der Scheduler zugreifen kann. Für die Festlegung des Rangs werden nebst der laufenden Zeit die vereinbarten Verbindungsparameter in die Bewertung einbezogen. Diese stehen bevorzugt in der Bewertungseinheit vorgelagerten Speichern zur Verfügung, auf welche nach Bedarf zügegriffen werden kann.

Die laufende Berechnung eines Rangs für jede Verbindung kann durch eine besondere Gestaltung des Formers und des Verfahrens zur Formung des Datenstroms stark vereinfacht werden. Ein Rang besteht aus einer Modusklasse, welche die Priorität für den Paketabgang bestimmt, und einem Gewicht, das innerhalb derselben Modusklasse für die Reihenfolge massgebend ist. Das Gewicht erhöht sich mit jedem Pakettakt nach Massgabe der vereinbarten Bandbreite für diese Verbindung. Ausgezeichnetes Ereignis für eine Verbindung ist das neue Vorstossen eines Datenpakets an den Kopf der zur Verbindung gehörigen (virtuellen) Warteschlange. Dies geschieht nach dem Abgang eines Datenpakets dieser Verbindung sofern ein weiteres in der Warteschlange ansteht, oder wenn das im selben Takt ankommende Datenpaket irgend einer Verbindung direkt an den Kopf der Warteschlange gelangt. Pro Takt gibt es also höchstens zwei solch ausgezeichnete Ereignisse. Nur solche aber machen eine Neuberechnung eines Rangs notwendig. Für alle anderen Ränge erhöht sich lediglich das Gewicht linear mit der Zeit und es genügt, diese laufend aufzudatieren.

Die Erfindung sieht in einer bevorzugten Ausführungsform eine Unterteilung der Bewertungseinheit in zwei Teile vor. In einer einfach vorhandenen ersten Verarbeitungseinheit werden verbindungsindividuelle Bezugsgrössen berechnet. In einer je Verbindung einmal vorhandenen zweiten Verarbeitungseinheit werden diese lediglich noch gewichtet aufdatiert und mit der Priorität versehen. Die Bezugsgrössenberechnung in der ersten Verarbeitungseinheit braucht pro Takt für höchstens zwei Verbindungen vorgenommen zu werden. Bevorzugt enthält die zweite Verarbeitungseinheit einen Zähler, der durch die von der ersten Verarbeitungseinheit stammende Bezugsgrösse initialisiert wird, der in Abhängigkeit eines Verkehrsparameters modifizierte Pakettakte zählt, und dessen Stand zusammen mit der Priorität den Rang ergibt.

Im bevorzugten Verfahren zum Formen eines Stroms von Datenpaketen spiegelt sich diese Unterteilung in zwei Verarbeitungseinheiten. Das Verfahren stellt in jedem Pakettakt fest, für welche Verbindungen ein Datenpaket an den Kopf der Warteschlange vorstösst, sei es, dass das Paket dieser Verbindung abgeht und ein wartendes Paket nachrückt, sei es dass ein Paket irgendeiner Verbindung ankommt und direkt an den Kopf der virtuellen Warteschlange gelangt. Für diese Verbindung(en) werden Bezugsgrössen neu berechnet, für alle anderen Verbindungen werden die Bezugsgrössen inkrementiert, wobei das Inkrement vom vereinbarten Verkehrsparameter für diese Verbindung abhängt.

Die Erfindung wird anhand der Figuren 1 bis 3 näher erläutert, die Folgendes zeigen:

Fig. 1: Prinzipschema des Formers mit den wesentlichen, zusammenwirkenden Bestandteilen;

Fig. 2: Schematischer Funktionsablauf für die erste Verarbeitungseinheit, und

Fig. 3: Funktionsschema einer zweiten Verarbeitungseinheit.

Unabdingbar für einen Former ist die Möglichkeit zur Speicherung und selektiven Weitergabe von Datenpaketen oder - wie diese für die Übertragungen im ATM genannt werden - Zellen. Der tatsächliche Speicherort für die Zellen und die Speicherverwaltung können dabei getrennt sein. Zur Speicherverwaltung gehört meist ein sogenannter Scheduler, ein Schaltelement, das einen gegebenenfalls laufend aufzudatierenden Ablaufplan enthält, der bestimmt, wann und/oder unter welchen Bedingungen ein Speichereintrag wie zu behandeln ist. Ein einfaches Beispiel für einen Scheduler ist ein Taktgeber, der das Auslesen eines FIFO-Registers steuert, an dessen Eingang die Daten asynchron ankommen können. Gut bekannt sind zum Beispiel auch komplexere Scheduler, welche Zellen an den Köpfen einer Mehrzahl von Warteschlangen wie folgt bedienen: Es wird die Zelle ausgewählt, welche die höchste Priorität aufweist; bei mehreren gleichwertigen Kandidatinnen wird jeweils die nächte in einer vorbestimmten Reihenfolge ausgewählt (Round Robin-Abfrage), oder jene, die unter den Gleichberechtigten schon am längsten wartet. Die Art der physikalischen Realisierung eines Pufferspeichers ist für die Erfindung nicht von Belang. Wenn in der Folge über das Abspeichern, Einordnen in Warteschlangen und Auslesen von Datenpaketen oder Zellen und ähnliche Vorgänge geschrieben wird, so sind damit die logischen Operationen gemeint, ohne Einschränkung auf eine physikalische Ausführungsform. Ebenso wird mit der Bezeichnung Eingang bzw. Ausgang die logische Beziehung der Schaltungsbestandteile und Datenströme zueinander charakterisiert und nicht ein physisch greifbares Objekt beschrieben.

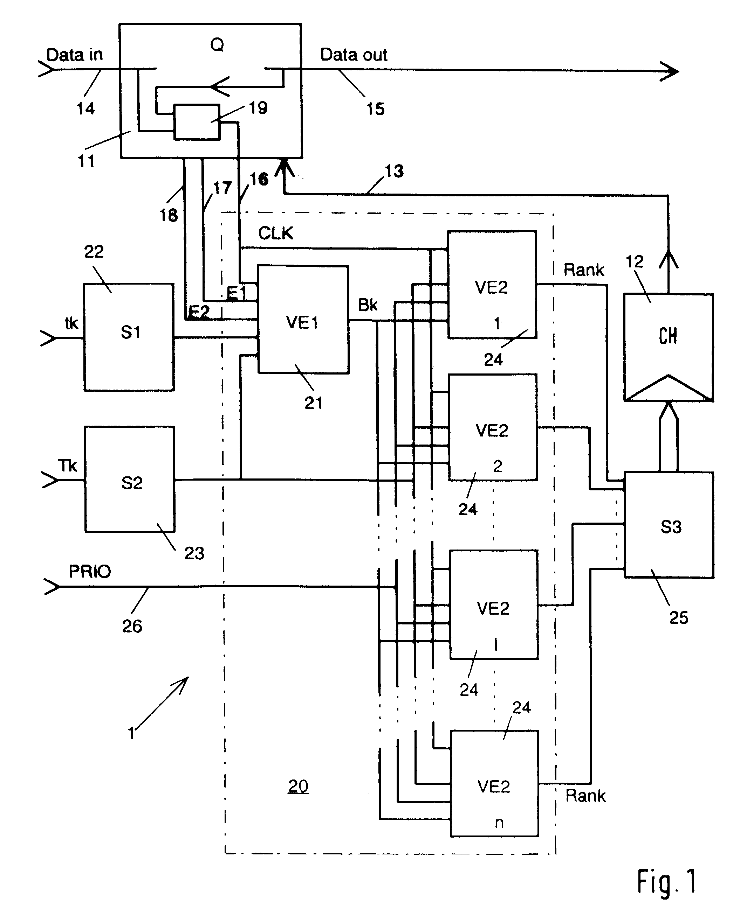

Die Figur 1 zeigt das Prinzipschema eines erfindungsgemässen Formers 1 mit dem Zwischenspeicher 11 und dem diesen über die Verbindung 13 beeinflussenden Scheduler 12 (SCH). Der Zwischenspeicher 11 nimmt die am Eingang 14 ankommenden Datenpakete auf, erfasst die Verbindungsinformation und reiht das Paket an seinem zugehörigen Platz in der entsprechenden Warteschlange ein. Über den Ausgang 15 werden die Datenpakete unter dem Einfluss der Vorgaben des Schedulers SCH 12 ausgegeben. Der in der Figur mit Q bezeichnete Zwischenspeicher 11 puffert also die Datenpakete in verbindungsindividuellen Warteschlangen. Für die zeitlich korrekte Verarbeitung der Zellen (Datenpakete) wird der Zelltakt benötig. Dieser kann aus dem Zellenstrom extrahiert werden. Die Funktion der Zelltaktextraktion ist implizit im Zwischenspeicher 11 enthalten; im Schema der Figur 1 ist sie durch einen Funktionsblock 19 angedeutet. Der Takt wird über den Ausgang 16 weiteren Bestandteilen des Formers zur Verfügung gestellt.

Als Besonderheit für den Former 1 liefert der Zwischenspeicher 11 ferner über die Ausgänge 17 und 18 zwei Ereigniswerte E1 und E2 für eine nachgeschaltete Bewertungseinheit 20. Dabei enthält der Ereigniswert E1 die Information darüber, zu welcher virtuellen Verbindung i die Zelle gehört, die den Puffer Q verlässt, und ob in der Warteschlange derselben Verbindung noch eine weitere Zelle ansteht. Der Ereigniswert E2 enthält die Aussage darüber, ob im betrachteten Zelltakt eine Zelle eintrifft, die unmittelbar an den Kopf der Warteschlange ihrer virtuellen Verbindung j vorstösst und zu welcher Verbindung j sie gehört.

Die Bewertungseinheit 20 sowie die vor- und nachgelagerten Komponenten sind in der Figur 1 in einer bevorzugten Ausführungsform detaillierter angegeben. Die weitere Beschreibung der Erfindung erfolgt anhand dieser speziellen Ausführungsform, ist aber nicht auf diese beschränkt; auf mögliche Varianten und Verallgemeinerungen wird gegebenenfalls hingewiesen.

Die Bewertungseinheit 20 verarbeitet ausser den Ereigniswerten die Vertragsparameter oder daraus abgeleitete Grössen - in der Figur 1 greift sie darauf über zwei Speicher (S1, S2) zu - und berücksichtigt für jede Verbindung eine Priorität. Aus all diesen Angaben ermittelt sie für jede der n möglichen Verbindungen einen Rang, der massgebend ist für die Bestimmung der Zelle, die als nächstes ausgelesen wird. In der bevorzugten Ausführung werden die ermittelten Ränge in einem dritten Speicher S3, dem Wertungsspeicher 25, festgehalten, auf welche der Scheduler 12 zugreift.

Der Zelltakt CLK und die Ereigniswerte E1 und E2 sind an Eingänge einer einzigen ersten Verarbeitungseinheit 21 geführt, die Bestandteil der Bewertungseinheit 20 in der bevorzugten Ausführungsform ist. Diese hat über zwei weitere Eingänge Zugriff auf einen ersten Speicher S1, den Sendezeitenspeicher 22, und einen zweiten Speicher S2, den Bitratenspeicher 23. Das Ergebnis der ersten Verarbeitungseinheit VE1 sind zwei Bezugsgrössen Bk, die je einer virtuellen Verbindung i bzw. j zugeordnet sind.

Im folgenden steht der Index i bzw. j jeweils für eine einzige individualisierte virtuelle Verbindung, der Index k hingegen für eine zutreffende von mehreren möglichen Verbindungen: $k \in \{i,j\}$ oder $k \in \{1,2,...,n\}$ oder ähnlich.

Pro virtueller Verbindung, die verarbeitet werden kann, ist eine zweite Verarbeitungseinheit 24 VE21, VE22 VE21, ... VE2n vorhanden. n kann zum Beispiel 2048 betragen. Die in der ersten Verarbeitungseinheit 21 berechnete Bezugsgrösse Bk dient als Initialisierung für die entsprechende zweite Verarbeitungseinheit VE2k. Jede der zweiten Verarbeitungseinheiten 24 datiert die Bezugsgrösse Bk laufend auf und generiert zusammen mit der Angabe über die Priorität 26 (PRIO) je einen Wert, z. B. in Form eines Bitmusters, der als Rang für die zugehörige Verbindung festgehalten wird. In der Figur 1 geschieht dies im Wertungsspeicher 25 (S3).

Die Aufgabe der ersten Verarbeitungseinheit 21 besteht im wesentlichen darin, die aktuellen Werte für die im jeweiligen Taktzeitpunkt betroffenen Verbindungen auszuwerten und daraus keine, eine oder zwei Bezugsgrössen Bk zu berechnen. Auslöser für die Verarbeitung ist jeweils der Abgang einer Zelle aus dem Zwischenspeicher oder das Eintreffen einer neuen Zelle oder beides. Die zu tätigende Bezugsgrossenberechnung bezieht sich auf die Verbindung i der abgegangenen Zelle. Wenn im betrachteten Takt eine Zelle der Verbindung j ankommt und sofort an den Kopf der Warteschlange j tritt, ist auch für diese Verbindung eine Bezugsgrössenberechnung auszuführen. Pro Takt sind höchstens zwei, im zeitlichen Mittel eine Berechnung durchzuführen. Die aktuellen Werte, welche für den weiteren Ablauf und die Berechnung eine Rolle spielen, sind die laufende Zeit t, die Nummer i der Verbindung der abgegangenen Zelle, die frühestmögliche Zeit ti für den Abgang einer weiteren Zelle der Verbindung i und der Kehrwert Ti der vereinbarten Bandbreite der Verbindung i. Wenn eine zweite Berechnung zu machen ist, spielt ferner die Nummer j der Verbindung einer beim Ankommen sofort an den Kopf ihrer Warteschlange vorstossenden Zelle, die frühestmögliche Zeit tj für den Abgang einer Zelle der Verbindung j und der Kehrwert Tj der Bandbreite der Verbindung j eine Rolle. Die berechnete Bezugsgrösse Bk für eine bestimmte Verbindung wird im selben Takt an die entsprechende zweite Verarbeitungseinheit weitergegeben.

Die Verarbeitung der Daten erfolgt jeweils im Takt der ankommenden bzw. abgehenden Datenpakete oder Zellen. Der Takt bestimmt sich aus der maximal möglichen Zahl von Zellen, die pro Zeiteinheit ankommen bzw. ausgegeben werden können. Die laufende Zeit t im Sinne der vorliegenden Erörterungen ist eine absolute Zeit, die jedoch nur zu diskreten Zeitpunkten erfasst wird. Ein nächster unterscheidbarer Zeitpunkt nach einer bestimmten Zeit t liegt bei $t+\Delta$, worin $\Delta$ die Taktzeit bezeichnet. Für die Verarbeitung steht also immer das Intervall $[t,t+\Delta)$ zur Verfügung. Die Zeiten tk bzw. ti und tj sind ebenfalls absolute Zeiten, die aber feiner diskretisiert sein können als auf einen Zelltakt genau. Die Bandbreiten-Kehrwerte Tk sind Zeitabschnitte gemessen in Taktzeiten, die ebenfalls Bruchteile von Taktzeiten aufweisen können.

Die Darstellung der laufende Zeit t erfolgt systemintern in geeigneter Weise, zum Beispiel als Anzahl von Takten bezogen auf einen bestimmten Wert im Ausgangszeitpunkt. tk und Tk werden entsprechend dargestellt, wobei hier im allgemeinen auch Bruchteile von Taktzeiten zu berücksichtigen sind. In der Regel werden bei der apparativen Ausführung interne Verarbeitungstakte mit kürzeren Taktzeiten definiert; meist genügt eine Diskretisierung mit einem solchen internen Takt für die Darstellung der Bruchteile.

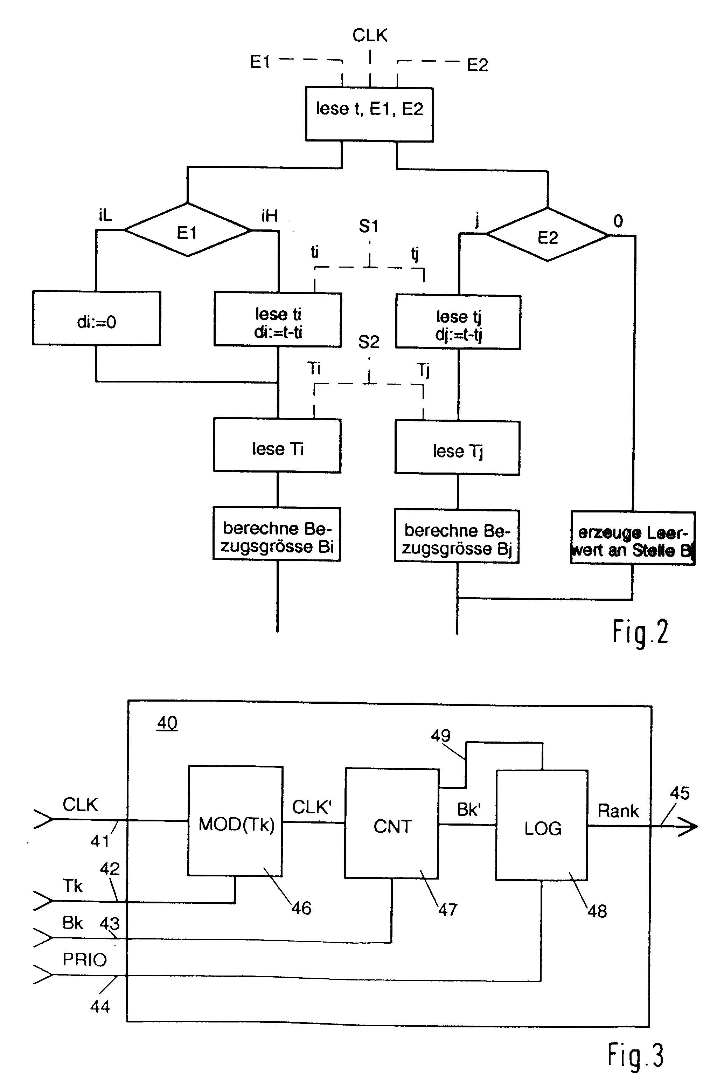

Die erste Verarbeitungseinheit 21 (VE1) ist durch ihre Funktion definiert, wie sie nachstehend anhand der Figur 2 eingehend beschrieben ist. Die Realisierung kann auf verschiedenste Weise erfolgen, zum Beispiel als elektronische Schaltung durch eine ASIC (anwenderspezifische integrierte Schaltung), und stellt für den Fachmann keine besondere Herausforderung dar. Die Figur 2 zeigt schematisch die Verarbeitungsschritte, welche in der ersten Verabeitungseinheit ablaufen. Unmittelbar vor Beginn eines Taktes, dessen Zeitpunkt mit t bezeichnet wird, ist die Zelle der Verbindung i aus dem Zwischenspeicher Q abgegangen, einem Puffer mit virtuellen Warteschlangen für jede Verbindung und einem entsprechenden Puffer-Management. Damit sind im Puffer zwei Ereignisse bestimmt worden, die an die erste Verarbeitungseinheit weitergegeben werden. Ein erstes Ereignis tritt mit dem Abgang einer Zelle aus dem Zwischenspeicher ein. Es ist charakterisiert durch seinen Ereigniswert E1, welcher einerseits die Nummer i der Verbindung der abgegangenen Zelle und andererseits die Information darüber enthält, ob in der Warteschlange i noch eine Zelle vorhanden ist. Ein zweites Ereignis tritt dann ein, wenn zur Zeit t eine ankommende Zelle direkt an die vorderste Position in den Puffer geschrieben wird, wenn also die Warteschlange der entsprechenden Verbindung j leer war. Es lässt sich charakterisieren durch einen Ereigniswert E2, der die Nummer der Verbindung j enthält, bzw. einen ausgezeichneten und nicht als Nummer einer Verbindung verwendeter Wert, hier im folgenden mit 0 bezeichnet, wenn das Ereignis nicht eintritt.

Die erste Verarbeitungseinheit berechnet eine Bezugsgrösse Bi mit den Vorgaben, wie sie aus dem linken Teil der Figur 2 hervorgehen. Enthält die Warteschlange der Verbindung i keine Zelle mehr, so ist der Ereigniswert E1 auf iL gesetzt. In der Folge setzt die VE1 die interne Variable di auf 0. Andernfalls ist der Ereigniswert E1 auf iH gesetzt. Dann liest die VE1 aus dem Speicher S1 (s. Fig. 1) die Zeit ti (oder eine andere dafür relevante Grösse, aus der ti bestimmt wird) für den frühestmöglichen Abgang einer weiteren Zelle der Verbindung i und berechnet die interne Variable di zu t-ti. Dem Speicher S2 entnimmt sie den Bandbreiten-Kehrwert Ti der Verbindung i und berechnet daraus die Bezugsgrösse Bi nach folgender Formel:

$$B_i = \left\lfloor \frac{d_i}{T_i} \right\rfloor \quad ,$$

das heisst, es wird die grösste ganze Zahl ermittelt, die kleiner oder gleich dem Quotienten aus di und Ti ist. (Die eckigen Halbklammern stehen für die Operation der Disketisierung - der Klammerinhalt wird auf die nächste ganze Zahl ab- bzw. aufgerundet, je nachdem, ob die oberen oder die unteren Querstriche zur vollständigen eckigen Klammer fehlen).

Weiter ermittelt die VE1 eine allfällige Bezugsgrösse Bj. Wenn der Ereigniswert E2 0 ist, braucht keine Berechnung durchgführt zu werden; an Stelle von Bj wird dann ein Leerwert erzeugt. Andernfalls, wenn in der Zeit t eine Zelle der Verbindung j in den Zwischenspeicher gelesen wird und diese Zelle direkt an den Kopf der Warteschlange vorrückt, liest die VE1 aus dem Speicher S1 die Zeit tj für den frühestmöglichen Abgang einer Zelle der Verbindung j und berechnet die interne Variable dj zu t-tj. Dem Speicher S2 entnimmt sie den Kehrwert Tj der Bandbreite der Verbindung j und berechnet daraus die Bezugsgrösse Bj nach folgender Formel:

$$B_j = \left\lfloor \frac{d_j}{T_j} \right\rfloor \quad .$$

Die Figur 2 zeigt den Ablauf schematisch als Parallelverarbeitung. Selbstverständlich ist auch eine serielle Ausführung möglich. Ferner sind Mischformen denkbar. Da für die zwei Verbindungen identische Operationen auszuführen sind, können bei der Realisierung Schaltungsteile im Multiplexverfahren benützt werden. Die berechneten Bezugsgrössen Bi und Bj können auf verschiedene bekannte Arten an die zweiten Verarbeitungseinheiten weitergegeben werden (Bus, serielle Übertragung mit Abhorchung der Adressen durch die VE2, senden in bestimmten Zeitschlitzen usw.). Da die erste Verarbeitungseinheit für den Former nur ein einziges Mal vorhanden zu sein braucht, wird der Fachmann beim Realisieren des Formers darauf achten, schaltungs- und/oder zeitaufwendigere Teile möglichst in die VE1 zu verlegen und die VE2 so einfach wie möglich zu halten. Dazu gehört auch die Wahl, statt des Kehrwerts Tk der Bandbreite mit dieser selbst zu arbeiten und Multiplikationen statt Divisionen auszuführen.

Aufgabe der zweiten Verarbeitungseinheit VE2 ist es, für eine bestimmte Verbindung k einen Rang zur Verfügung zu halten, der die Information drüber enthält, wie dringend ein Auslesen der Zelle dieser Verbindung aus dem Puffer ist. Massgebend dafür ist einerseits die Priorität, die dieser Verbindung k zukommt, andererseits innerhalb derselben Prioritätsklasse die Zeit, während der eine Zelle bereits auf das Ausgelesenwerden warten musste, bezogen auf die für die Verbindung massgebende Bandbreite bzw. deren Kehrwert Tk. Die letztgenannte Gewichtung ist in der Bezugsgrösse Bk enthalten, die sich mit fortschreitender Zeit laufend erhöht. Die Priorität bestimmt sich aus der Art des Übertragungsmodus. So wird zum Beispiel einer Zelle einer CBR-Verbindung üblicherweise Vorrang vor einer Zelle einer rt VBRV-Verbindung und dieser wiederum vor jener einer UBR-Verbindung zugewiesen - vgl. hierzu die eingangs erwähnten "Transfer Capabilities". Da Bk nur beim Abgang einer Zelle oder bei Neufestsetzung der Bandbreite für die Verbindung k sprunghaft ändert, sonst aber lediglich linear mit der Zeit anwächst, braucht in der VE2 keine eigentliche Berechnung stattzufinden; eine Aufdatierung der Bezugsgrösse Bk und Verknüpfung mit der Priorität genügt. Mit Aufdatieren ist das Nachführen einer Grösse in Abhängigkeit eines Ereignisses auf Grund einer vorgegebenen Gesetzmässigkeit bezeichnet. Im einfachsten Fall handelt es sich um die Addition eines festen Betrags bei jedem Takt. Der Zuwachs kann aber auch durch eine kompliziertere Gesetzmässigkeit bestimmt sein.

Die Figur 3 zeigt schematisch die Funktion einer zweiten Verarbeitungseinheit 40, mit einem Eingang für den Takt CLK (41), den Kehrwert der Bandbreite Tk (42), die Bezugsgrösse Bk (43) und die Priorität PRIO (44) sowie einen Ausgang für den Rang (45). Dazwischen liegen ein erster Funktionsblock 46 zur internen Anpassung des Takts an die vereinbarte Bandbreite, ein zweiter Funktionsblock 47 zur Aufdatierung der Bezugsgrösse im internen Takt und ein dritter Funktionsblock 47 zur Verknüpfung des Gewichts mit einer Priorität und der Freigabesteuerung.

Am Takteingang 41 steht der Zelltakt oder ein daraus abgeleiteter Hilfstakt an. Der Zelltakt ist durch die Zellbewegungen aller Verbindungen bestimmt, also der im Datenstrom am Puffer ankommenden und abgehenden Zellen. Die Zellbewegungen, die - wie eingangs erläutert - zeitlichen Schwankungen unterworfen sind, bilden die Grundlage für die Zeitberechnungen; massgebend sind die Taktzeit $\Delta$ zwischen zwei Zellankünften bzw. Zellabgängen und die Anzahl der Taktzeiten. Ein Hilfstakt kann zum Beispiel ein Vielfaches der Frequenz des Zelltakts aufweisen und - trotz zeitlicher Schwankungen - auf diesen synchronisiert sein. Für die einzelne Verbindung ist jedoch die Zeit gemessen am vereinbarten Parameter von Bedeutung. Die Aufdatierung der Bezugsgrösse Bk erfolgt daher nicht unmittelbar durch den Zelltakt, sondern durch einen um den Faktor des Kehrwerts Tk der Bandbreite verlangsamten Takt CLK'. Diese Taktanpassung geschieht im ersten Funktionsblock 46. Dieser kann zum Beispiel einen sogenannten "bit rate multiplier" enthalten, der einen gegenüber dem Zelltakt vielfach höheren Hilfstakt unterteilt. Oder er enthält einen einstellbaren Modulozähler mit Restübertrag, der nach folgendem Prinzip arbeitet: Der Zähler wird durch den Zelltakt inkrementiert und wieder zurückgesetzt, wenn der Zählerstand einen Vergleichswert übertrifft. Der Vergleichswert wird beim Start auf den Basiswert gesetzt, in der vorliegenden Anwendung also auf Tk. Beim Zurücksetzen des Zählers wird der Zählüberschuss, das ist die Differenz zwischen dem letzten Zählwert und dem Vergleichswert, vom Basiswert abgezogen. Mit dem Basiswert Tk, dem Vergleichswert V und dem jeweiligen Zählerstand Z beim Zurücksetzen ($Z =^{\lceil} V$) gilt also V(n+1):=Tk-(Z(n)-V(n)). Damit ergibt sich ein verlangsamter Takt CLK' mit Taktzeiten von $_{\llcorner}$ $T_{k \lrcorner}$ und $_{\llcorner}$ $T_{k \lrcorner}$+1 in einem Verhältnis, das im Mittel zu einem Takt Tk entspricht. Eine allfällige Parameteränderung von Tk kann jederzeit ohne Neustart eingebracht werden und führt sofort zum gewünschten neuen Taktverhältnis.

Allenfalls kann beim Initialisieren des Zählers im Vergleichswert auch ein Rundungsrest

$$R_k = \frac{d_k}{T_k} - \left\lfloor \frac{d_k}{T_k} \right\rfloor$$

aus der Bezugsgrössenberechnung berücksichtigt werden. Hierfür müssten allerdings die adäquaten Übertragungsmöglichkeiten bereit gehalten werden. Eine Variante dazu besteht darin, Bk nicht auf eine ganze Zahl gerundet, sondern als Quotienten von di und Tk zu übertragen und erst in der zweiten Verarbeitungseinheit aufzutrennen; der Ganzzahlanteil wird in der vorgesehenen Weise als Bezugsgrösse verwendet, der Rest wird in die Initialisierung des Vergleichswerts des Modulozählers mit Restübertrag einbezogen.

Die Aufdatierung der Bezugsgrösse Bk erfolgt mit Hilfe des verlangsamten Takts CLK' im zweiten Funktionsblock 47. Dieser kann zum Beispiel ebenfalls einen Zähler CNT enthalten, der jedesmal, wenn für die entsprechende Verbindung k eine neue Bezugsgrösse Bk berechnet worden ist, über den Bezugsgrösseneingang 43 auf diesen neu berechneten Wert gesetzt wird. Dieser besagt ja definitionsgemäss im wesentlichen, wieviele verlangsamte Takte noch verstreichen müssen, bis die nächste Zelle dieser Verbindung abgehen darf (Bk negativ) bzw. schon verstrichen sind, in denen sie hätte abgehen dürfen (Bk positiv). Diese Grösse wird nun durch den verlangsamten Takt CLK' laufend erhöht. Die derart aufdatierte Bezugsgrösse Bk' gilt es nun noch mit der Priorität PRIO vom Prioritätseingang 44 zu verknüpfen, was im dritten Funktionsblock geschieht. Es kann sich dabei um ein simples Binärregister handeln, dessen Inhalt als Zahl interpretiert wird, wobei die Priorität als Zahl in die bedeutungsvolleren vorderen Stellen des Registers geschrieben wird. In die hinteren Stellen wird laufend die Zahl Bk' aus dem zweiten Funktionsblock 47 geschrieben. Der Registerinhalt stellt den gewünschten Rang dar. Er wird in geeigneter Weise über den Ausgang 45 ausgelesen, bevorzugt in einen Speicher S3 25, auf den der Scheduler SCH 12 zugreifen kann (Fig. 1). Allerdings muss ein negatives Bk' ungeachtet der Priorität sicherstellen, dass keine Zelle dieser Verbindung ausgelesen wird. Dies kann zum Beispiel durch ein Flagbit geschehen, welches eine Blockierung des Registers veranlasst, was in der Figur 3 durch die Verbindung 49 angedeutet ist. Das Flagbit kann z. B. das MSB des Zählers im zweiten Funktionsblock sein, das als Uberschreibbefehl der Registerausgänge dient, so dass bei negativem Gewicht ein Rang 0 entsteht, der beim Auslesen entsprechend interpretiert wird.

Die beschriebene Ausgestaltung der ersten und der zweiten Verarbeitungseinheit ist eine mögliche, bevorzugte Ausführungsform der Erfindung, aber nicht die einzige. So ist es zum Beispiel denkbar, die Bezugsgrösse anders zu definieren (Bv statt B) und Bvk in der ersten Verarbeitungseinheit als $Bv_k =_{\llcorner} d_{k \lrcorner}$ zu berechnen und an die VE2 weiterzugeben, so dass die VE1 nur einen der zwei Verbindungsparameter, den nächstmöglichen Abgangszeitpunkt tk einer Zelle der Verbindung k, benötigt. Die Aufdatierung von Bvk zu Bvk' in der VE2 erfolgt dann mit dem Zelltakt, womit die Generierung eines verlangsamten Takts und damit auch ein erster Funktionsblock in der VE2 entfällt. Der Zähler CNT im zweiten Funktionsblock muss bei dieser Variante aber viel grössere Zahlen bewältigen können; für niederfrequente Verbindungen verstreichen sehr viele Zelltakte, bis ein Zellenabgang stattfindet und der Zähler zurückgesetzt wird. Um aus der abgewandelten Bezugsgrösse Bk' die mit allen anderen Verbindungnen vergleichbare Gewichtung Bk' zu erhalten, welche die Bandbreite der Verbindung k berücksichtigt, braucht es eine weitere Operation, die Multiplikation von Bvk' mit der Bandbreite 1/Tk. Der dritte Funktionsblock wird also entsprechend aufwendiger.

## Patentansprüche

1. Former für einen Strom von Datenpaketen, insbesondere einen ATM-Verkehrsstrom, mit Mitteln (11, 12) zum verbindungsindividuellen Zwischenspeichern und Auslesen der Datenpakete sowie zur Extraktion des Pakettakts, gekennzeichnet durch eine Bewertungseinheit (20), welche im Pakettakt für jede Verbindung gestützt auf die aktuelle Zeit, den Zeitpunkt des letzten Auslesens eines Datenpakets, die vereinbarten Verkehrsparameter (tk, Tk) und die Priorität (PRIO) einen Rang (Rank) ermittelt, der massgebend ist für die Auswahl des als nächstes auszulesenden Datenpakets.

2. Former nach Anspruch 1, gekennzeichnet durch ein der Bewertungseinheit (20) nachgeschaltetes Mittel (25) zum Speichern der ermittelten Ränge und eine auf dessen Inhalte zugreifende Bewertungs- und Auswahleinheit (12), die ihrerseits das Auslesen der Datenpakete aus den Mitteln (11) zum verbindungsindividuellen Zwischenspeicher der Datenpakete steuert.

3. Former nach Anspruch 1 oder 2, gekennzeichnet durch je einen der Bewertungseinheit (20) vorgelagerten Speicher (22, 23) für jede Art von vereinbarten Verbindungsparametern (tk, Tk), deren Inhalte von der Bewertungseinheit (20) nach Bedarf ausgelesen werden.

4. Former nach einem der vorstehenden Ansprüche, gekennzeichnet durch eine Bewertungseinheit (20) in Form einer ersten Verarbeitungseinheit (21) zur Ermittlung von Bezugsgrössen (Bk) aus Verkehrsparametern (tk, Tk) und aus Ereignissen (E1, E2) von Verkehrsbewegungen und pro Verbindung je einer nachgeschalteten zweiten Verarbeitungseinheit (24) zur individuellen Aufdatierung des Rangs in Abhängigkeit der Zeit und eines Teils der Verkehrsparameter (Tk).

5. Former nach Anspruch 4, dadurch gekennzeichnet, dass die zweite Verarbeitungseinheit (24, 40)einen Zähler (47) enthält, der durch die von der ersten Verarbeitungseinheit (21) stammende Bezugsgrösse (Bk) gesetzt wird, der Paket takte in Bezug auf einen Verkehrsparameter (Tk) zählt, und dessen Stand zusammen mit der Priorität (PRIO) den Rang (Rank) ergibt.

6. Verfahren zum Formen eines Stroms von Datenpaketen, insbesondere eines ATM-Verkehrsstroms, unter Berücksichtigung einer Priorität und Einhaltung vereinbarter Verkehrsparameter für jede Verbindung, wobei ankommende Datenpakete verbindungsindividuell in eine Warteschlange eingereiht und der Pakettakt bestimmt wird, gekennzeichnet durch folgende Verfahrensschritte während einer Pakettaktperiode:

   - Ermitteln einer Bezugsgrösse (Bk) aus den Verkehrsparametern (tk, Tk) und der seit dem letzten Paketabgang verflossenen Zeit (t) für jede Verbindung;
   - Bestimmen eines Rangs (Rank) auf Grund der Priorität (PRIO) und der Bezugsgrösse (Bk) für jede Verbindung;
   - Bestimmen der Verbindung mit dem höchsten Rang, und
   - Auslesen des Datenpakets der ermittelten Verbindung aus der Warteschlange.

7. Verfahren nach Anspruch 6, dadurch gekennzeichnet, dass das Bestimmen der Verbindung mit dem höchsten Rang folgende Schritte umfasst:

   - Speichern der neu festgelgten Ränge;
   - Absuchen der gespeicherten Ränge nach dem ranghöchsten Speichereintrag beziehungsweise, falls mehrere ranghöchste Einträge gespeichert sind, dem nächstfälligen Speichereintrag, und
   - Feststellen der zum ausgewählten Speichereintrag gehörenden Verbindung.

8. Verfahren nach Anspruch 6 oder 7, dadurch gekennzeichnet, dass die Bezugsgrösse (Bi, Bj) für die Verbindung des zuletzt abgegangenen Datenpakets und/oder des ankommenden Datenpakets, das direkt an den Kopf seiner Warteschlange gelangt, neu berechnet wird, die Bezugsgrössen (Bk) aller anderen Verbindungen hingegen aufdatiert werden.

9. Verfahren nach Anspruch 8, gekennzeichnet durch folgende Schritte für das Ermitteln der Bezugsgrössen (Bi, Bj):

- Feststellen der Verbindung i eines abgehenden Datenpakets;
- Berechnen einer Bezugsgrösse (Bi) für den Abgangs zeitpunkt eines nächsten Datenpakets der Verbindung i;
- Feststellen einer Verbindung j eines eintreffenden Datenpakets, das unmittelbar in die Kopfposition der Warteschlange vorstösst;
- Berechnen einer Bezugsgrösse (Bj) für den Abgangszeitpunkt eines nächsten Datenpakets der Verbindung j, und
- Aufdatieren der Bezugsgrössen (Bk) aller anderen Verbindungen je durch eine mit einem Verkehrsparameter gewichteten Inkrementierung.

Fig.1

CLK

E1 — — ⌐   ⌐ — — E2

| lese t, E1, E2 |

iL ◇ E1 iH        S1

ti ⌐ · ⌐ tj

| di:=0 |   | lese ti<br>di:=t-ti |   | lese tj<br>dj:=t-tj |

j ◇ E2 0

S2

Ti ⌐ · ⌐ Tj

| lese Ti |   | lese Tj |

| berechne Be-<br>zugsgrösse Bi |   | berechne Be-<br>zugsgrösse Bj |   | erzeuge Leer-<br>wert an Stelle Bj |

Fig.2

40

CLK

41

| MOD(Tk) |  CLK'  | CNT |  Bk'  | LOG |  Rank

49

45

Tk    42

Bk   43

PRIO

44

46          47          48

Fig.3